# EUROPEAN PATENT APPLICATION

(11) **EP 4 250 677 A1**
(43) Date of publication of application: **27.09.2023**
(21) Application number: 20965429.2
(22) Date of filing: 16.12.2020
(51) Int. Cl.: H04L 47/25, H04L 47/10

(54) **NETWORK CONGESTION MANAGEMENT METHOD AND RELATED APPARATUS**

(71) Applicant: Huawei Technologies Co., Ltd., Shenzhen, Guangdong 518129 (CN)
(72) Inventor: DENG, Jie, Shenzhen, Guangdong 518129 (CN); HE, Yi, Shenzhen, Guangdong 518129 (CN)
(74) Representative: Thun, Clemens
(86) International application number: PCT/CN2020/136724
(87) International publication number: WO 2022/126411

(57) **Abstract**

Embodiments of this application disclose a network congestion method and a related apparatus, to control network congestion. The method in embodiments of this application includes: A first network device sends a first rate value to a second network device; and if an actual rate value is less than the first rate value, the first network device sends a second rate value to the second network device, where the second rate value is less than the first rate value.

## Description

### TECHNICAL FIELD

Embodiments of this application relate to the communication field, and in particular, to a network congestion management method and a related apparatus.

### BACKGROUND

Network congestion refers to a phenomenon that after network load reaches a specific degree, a network throughput does not increase linearly with an increase of the network load, or even may decrease sharply with an increase of the network load, which finally causes a network deadlock. To maximize overall network performance, network congestion needs to be controlled to ensure that network load remains in a proper state.

The transmission control protocol (transmission control protocol, TCP) is a widely used network transmission protocol. The TCP ensures end-to-end reliable transmission by using a response packet and a retransmission mechanism, and performs flow control based on a receiving capability of a receive end, to avoid network congestion. A TCP flow control manner is to reduce a data packet sending rate when a network transmission device such as a switch or a router is congested, a buffer is full, and a packet loss occurs.

However, reducing a data packet sending rate when a packet loss occurs may further cause a packet loss and retransmission, reducing a network transmission rate. A network congestion control method in the current technology is not ideal.

### SUMMARY

Embodiments of this application provide a network congestion management method and a related apparatus, to identify and control network congestion.

A first aspect of the embodiments of this application provides a network congestion management method. A first network device needs to receive data sent by a second network device, and the first network device may send a first rate value to the second network device. The first rate value is an expected rate value, and is used to indicate the second network device to send data to the first network device at the first rate value. After sending the first rate value to the second network device, the first network device may obtain an actual rate value, that is, obtain an actual rate value at which the first network device receives data sent by the second network device. If the actual rate value is less than the first rate value, it indicates that network congestion occurs, and consequently, a rate at which the first network device receives data is relatively low. In this case, the first network device may send a second rate value to the second network device. The second rate value is also an expected rate value, and is used to indicate the second network device to send data to the first network device at the second rate value. To control network congestion, the second rate value needs to be less than the first rate value.

In this embodiment of this application, the first network device sends, to the second network device, the first rate value that needs to be reached during data transmission, and obtains the actual rate value, to identify whether network congestion occurs. When network congestion occurs, the first network device sends the second rate value to the second network device, where the second rate value is less than the first rate value, so as to control network congestion.

With reference to the first aspect, in a first implementation of the first aspect of the embodiments of this application, to obtain maximum bandwidth utilization, the first network device may send the first rate value to the second network device based on a data transmission rate threshold.

In this embodiment of this application, the first network device determines the first rate value based on the data transmission rate threshold of the first network device, and sends the first rate value to the second network device, thereby reducing a step of bandwidth detection.

With reference to the first aspect or the first implementation of the first aspect, in a second implementation of the first aspect of the embodiments of this application, after the first network device sends the second rate value to the second network device, when an actual rate value is equal to the second rate value, it indicates that the network congestion disappears. In this case, the first network device may send a third rate value to the second network device based on a data transmission rate threshold. The third rate value is also an expected rate value, and is used to indicate the second network device to send data to the first network device at the third rate value, and the third rate value is greater than the second rate value.

In this embodiment of this application, the first network device may adjust an expected data transmission rate based on a network congestion status. When the network congestion disappears, the first network device may increase the expected data transmission rate, thereby improving flexibility of the solution.

With reference to the first aspect or the first implementation of the first aspect, in a second implementation of the first aspect of the embodiments of this application, when an actual rate value is less than the second rate value, it indicates that the network congestion has not been disappeared, and a rate still needs to be limited for the second network device. In this case, the first network device may send a fourth rate value to the second network device, where the fourth rate value is used to indicate the second network device to send data to the first network device at the fourth rate value, and the fourth rate value is less than the second rate value.

A second aspect of the embodiments of this application provides a network congestion management method. A second network device needs to send data to a first network device, and the second network device may first receive a first rate value sent by the first network device. The first rate value is used to indicate the second network device to send data to the first network device at the first rate value. After that, when the first network device determines that an actual rate value is less than the first rate value, the second network device may receive a second rate value sent by the first network device. Because the actual rate value indicates a rate at which the first network device receives data sent by the second network device, if the value is less than the first rate value, it indicates that network congestion occurs. Therefore, a rate at which the second network device sends data to the first network device needs to be decreased, that is, the second rate value is less than the first rate value.

In this embodiment of this application, the second network device sends data to the first network device at an expected rate. When network congestion occurs, the second network device may decrease, in a timely manner, the rate for sending data to the first network device, thereby avoiding a packet loss caused by deterioration of a network congestion status, and ensuring network performance.

With reference to the second aspect, in a first implementation of the second aspect of the embodiments of this application, the second network device may receive the first rate value sent by the first network device based on a data transmission rate threshold.

In this embodiment of this application, the second network device receives the first rate value sent by the first network device based on the data transmission rate threshold. Therefore, maximum bandwidth utilization can be obtained.

With reference to the second aspect or the first implementation of the second aspect, in a second implementation of the second aspect of the embodiments of this application, after the second network device receives the second rate value sent by the first network device, if an actual rate value is equal to the second rate value, it indicates that the network congestion disappears, and a data transmission rate may be increased. In this case, the second network device may receive a third rate value sent by the first network device based on a data transmission rate threshold, where the third rate value is used to indicate the second network device to send data to the first network device at the third rate value, and the third rate value is greater than the second rate value.

With reference to the second aspect or the first implementation of the second aspect, in a third implementation of the second aspect of the embodiments of this application, after the second network device receives the second rate value sent by the first network device, if an actual rate value is less than the second rate value, it indicates that the network congestion does not disappear. Therefore, the second network device needs to reduce a rate for sending data to the first network device. In this case, the second network device may receive a fourth rate value sent by the first network device, where the fourth rate value is used to indicate the second network device to send data to the first network device at the fourth rate value, and the fourth rate value is less than the second rate value.

In this embodiment of this application, the second network device may flexibly select a data sending rate based on a network congestion status, thereby improving flexibility of the solution.

A third aspect of the embodiments of this application provides a first network device. The first network device has functions of implementing the first network device in the first aspect. The functions may be implemented by hardware, or may be implemented by hardware executing corresponding software. The hardware includes one or more modules corresponding to the functions.

A fourth aspect of the embodiments of this application provides a second network device. The second network device has functions for implementing the second network device in the second aspect. The functions may be implemented by hardware, or may be implemented by hardware executing corresponding software. The hardware includes one or more modules corresponding to the functions.

A fifth aspect of the embodiments of this application provides a computer-readable storage medium, where the computer-readable storage medium stores instructions, and when the instructions are run on a computer, the computer is enabled to perform the methods in the foregoing aspects.

A sixth aspect of the embodiments of this application provides a computer program product. When the computer program product is executed on a computer, the computer performs the methods in the foregoing aspects.

### BRIEF DESCRIPTION OF DRAWINGS

FIG. 1 is a schematic diagram of a network transmission system according to an embodiment of this application;
FIG. 2 is a schematic flowchart of a network congestion management method according to an embodiment of this application;
FIG. 3 is another schematic flowchart of a network congestion management method according to an embodiment of this application;
FIG. 4 is a schematic diagram of a structure of a first network device according to an embodiment of this application; and
FIG. 5 is another schematic diagram of a structure of a first network device according to an embodiment of this application.

### DESCRIPTION OF EMBODIMENTS

Embodiments of this application provide a network congestion management method and a related apparatus, to identify and control network congestion.

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

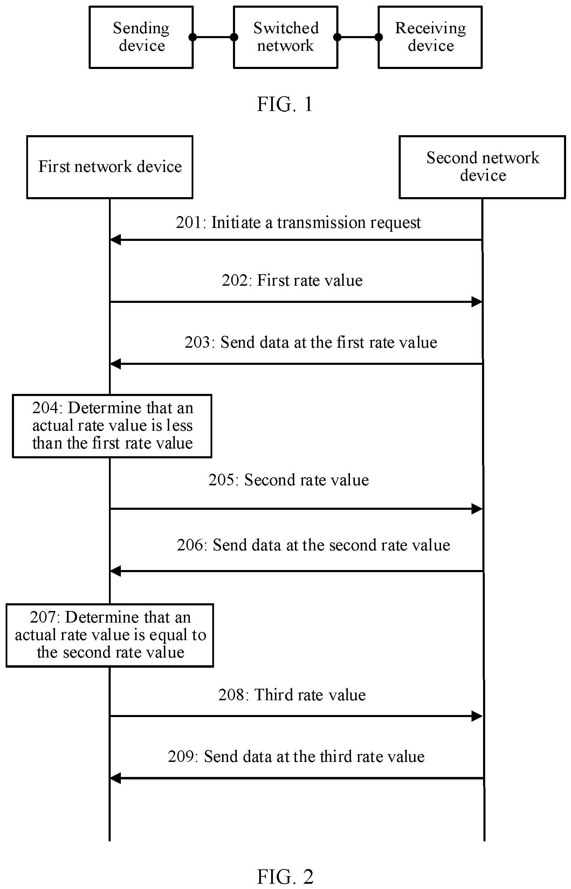

Refer to FIG. 1. A network transmission system includes a sending device, a switched network, and a receiving device. The sending device sends data to the receiving device through the switched network. After network load reaches a specific degree, a network throughput may decrease sharply, and even a network deadlock may occur. Therefore, when network congestion occurs, a rate at which the sending device sends data to the receiving device needs to be limited, to avoid further deterioration of the network congestion.

It should be noted that in embodiments of this application, the first network device may be the receiving device, and the second network device may be the sending device.

Refer to FIG. 2. A procedure of a network congestion management method in an embodiment of this application includes the following steps.

201: A second network device sends a transmission request to a first network device.

Before performing network data transmission, the second network device sends the transmission request to the first network device.

202: The first network device sends a first rate value to the second network device based on a data transmission rate threshold of the second network device.

After receiving the transmission request sent by the second network device, the first network device may send the first rate value to the second network device based on the data transmission rate threshold of the second network device. The first rate value is the current data transmission rate threshold of the second network device. For example, a manner of determining the data transmission rate threshold of the second network device may be as follows: The first network device determines a total data transmission rate threshold based on a maximum forwarding capability of the first network device, and then determines the data transmission rate threshold for the second network device based on a proportion of the second network device in the total data transmission rate threshold. It should be noted that the data transmission rate threshold of the second network device is also related to a service processing capability of the first network device. When more network devices in a network need to send data to the first network device, and when a sum of data transmission rate thresholds of all the network devices including the second network device is greater than the total data transmission rate threshold, the data transmission rate thresholds of all the network devices decrease. Therefore, the data transmission rate threshold of the second network device also decreases.

203: The second network device sends data to the first network device at the first rate value.

After receiving the first rate value sent by the first network device, the second network device sends data to the first network device at the first rate value.

204: The first network device determines that an actual rate value is less than the first rate value.

After sending the first rate value to the second network device, the first network device may collect statistics about total traffic that is sent by the second network device and that is received in a time window. A ratio of the total traffic to the time window is an actual rate value at which the first network device receives data sent by the second network device. If the actual rate value is less than the first rate value, the first network device may determine that network congestion exists.

205: The first network device sends a second rate value to the second network device.

After the first network device determines that network congestion exists, to further relieve network congestion, the first network device may send the second rate value to the second network device, where the second rate value is less than the first rate value.

206: The second network device sends data to the first network device at the second rate value.

After receiving the first rate value sent by the first network device, the second network device sends data to the first network device at the second rate value.

207: The first network device determines that an actual rate value is equal to the second rate value.

The first network device may collect statistics about total traffic that is sent by the second network device and that is received in a time window. A ratio of the total traffic to the time window is an actual rate value at which the first network device receives data sent by the second network device. If the actual rate value is equal to the second rate value, it indicates that the current network congestion disappears.

208: The first network device sends a third rate value to the second network device based on a data transmission rate threshold of the second network device.

When the first network device determines that the actual rate value is equal to the second rate value, it indicates that the network congestion disappears. Therefore, the first network device may appropriately increase a rate at which the second network device sends data. In this case, the first network device may send the third rate value to the second network device based on the data transmission rate threshold of the second network device. The third rate value is equal to the current data transmission rate threshold of the second network device. The third rate value is greater than the second rate value. When the data transmission rate threshold is relatively large, the third rate value may be greater than the first rate value. For example, when the first rate value is being determined, a sum of data transmission rate thresholds of all network devices including the second network device is greater than a total data transmission rate threshold; and when the third rate value is being determined, a sum of data transmission rate thresholds of all network devices including the second network device is less than or equal to the total data transmission rate threshold. In this case, the third rate value is greater than the first rate value.

209: The second network device sends data to the first network device at the third rate value.

The second network device sends data to the first network device at the third rate value.

It should be noted that, in this embodiment of this application, the rate value sent by the first network device to the second network device may be an average data rate, or may be a credit amount sent by the first network device to the second network device in a unit time.

In this embodiment of this application, the first network device may compare an actual rate value with a rate value sent to the second network device, to identify whether network congestion exists. If network congestion exists, the first network device sends a decreased rate value to the second network device to control the network congestion. When the network congestion is controlled, the first network device may send an increased rate value to the second network device, so as to obtain higher data transmission efficiency. In addition, network congestion control can be implemented by relying on the receiving device and the sending device, and a switched network does not need to be improved, thereby reducing costs of implementing the solution.

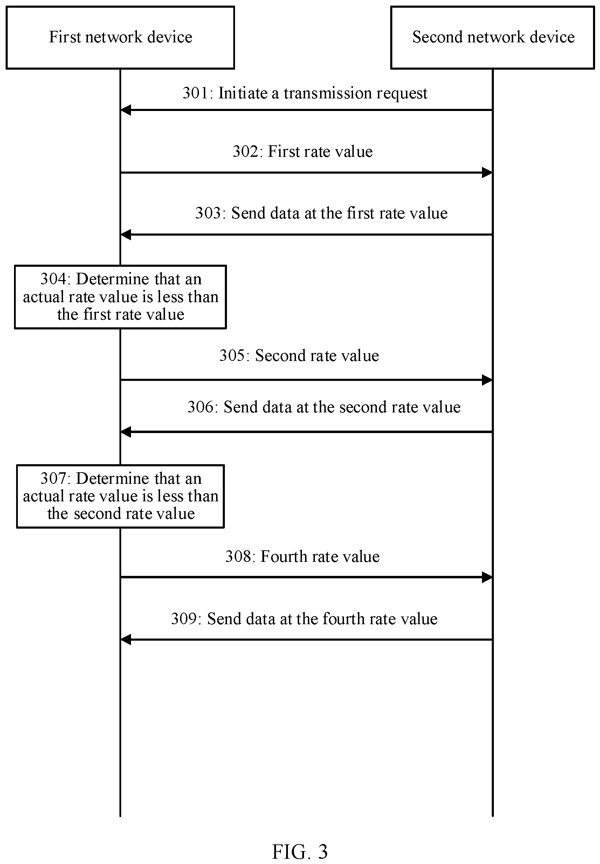

Refer to FIG. 3. Another procedure of a network congestion management method according to an embodiment of this application includes the following steps.

In this embodiment, step 301 to step 306 are similar to step 201 to step 206 in the embodiment corresponding to FIG. 2, and details are not described herein again.

307: The first network device determines that an actual rate value is less than the second rate value.

The first network device may collect statistics about total traffic that is sent by the second network device and that is received in a time window. A ratio of the total traffic to the time window is an actual rate value at which the first network device receives data sent by the second network device. If the actual rate value is less than the second rate value, the first network device may determine that the network congestion is not alleviated.

308: The first network device sends a fourth rate value to the second network device.

When the first network device determines that network congestion exists, the first network device may continue to decrease a rate value to be sent to the second network device, to further control the network congestion. Therefore, the first network device may send the fourth rate value to the second network device, where the fourth rate value is less than the second rate value.

309: The second network device sends data to the first network device at the fourth rate value.

After receiving the fourth rate value sent by the first network device, the second network device may send data to the first network device at the fourth rate value.

It should be noted that, in this embodiment of this application, after the second network device sends the data to the first network device at the fourth rate value, if the network congestion still exists, the first network device may continue to send a rate value smaller than the fourth rate value to the second network device until the network congestion disappears. These smaller rate values may also be referred to as the fourth rate value.

It should be noted that after the network congestion disappears, the first network device may continue to send the third rate value to the second network device, to increase a sending rate of the second network device. The third rate value is greater than the fourth rate value and is less than or equal to the first rate value.

It should be noted that, in this embodiment of this application, the rate value sent by the first network device to the second network device may be an average data rate, or may be a credit amount sent by the first network device to the second network device in a unit time.

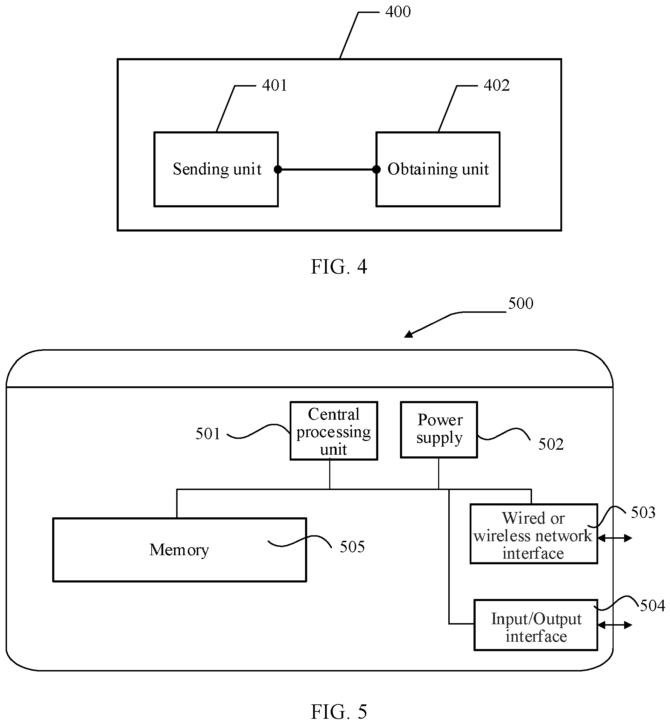

The following describes a first network device in an embodiment of this application. As shown in FIG. 4, the first network device 400 in this embodiment of this application includes a sending unit 401 and an obtaining unit 402.

The sending unit 401 is configured to send a first rate value to a second network device, where the first rate value is used to indicate the second network device to send data to the first network device at the first rate value.

The sending unit 401 is further configured to send a second rate value to the second network device when an actual rate value is less than the first rate value, where the second rate value is used to indicate the second network device to send data to the first network device at the second rate value, and the second rate value is less than the first rate value.

The sending unit 401 is specifically configured to send the first rate value to the second network device based on a data transmission rate threshold of the second network device.

The sending unit 401 is further configured to: when an actual rate value is equal to the second rate value, send a third rate value to the second network device based on a data transmission rate threshold of the second network device, where the third rate value is used to indicate the second network device to send data to the first network device at the third rate value, and the third rate value is greater than the second rate value.

The sending unit 401 is further configured to: when an actual rate value is less than the second rate value, send a fourth rate value to the second network device, where the fourth rate value is used to indicate the second network device to send data to the first network device at the fourth rate value, and the fourth rate value is less than the second rate value.

The obtaining unit 402 is configured to obtain an actual rate value, where the actual rate value is a rate value at which the first network device receives data sent by the second network device.

FIG. 5 is a schematic diagram of a structure of a first network device according to an embodiment of this application. The first network device 500 may include one or more central processing units (central processing unit, CPU) 501 and a memory 505. The memory 505 stores one or more application programs or data.

The memory 505 may be volatile storage or persistent storage. The programs stored in the memory 505 may include one or more modules, and each module may include a series of instruction operations for a server. Further, the central processing unit 501 may be configured to communicate with the memory 505, and perform, on the first network device 500, a series of instruction operations in the memory 505.

The first network device 500 may further include one or more power supplies 502, one or more wired or wireless network interfaces 503, one or more input/output interfaces 504, and/or one or more operating systems such as Windows ServerTM, Mac OS XTM, UnixTM, LinuxTM, and FreeBSDTM.

The central processing unit 501 may perform the operations performed by the first network device in the embodiments shown in FIG. 2 and FIG. 3. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A network congestion management method, comprising:
sending, by a first network device, a first rate value to a second network device, wherein the first rate value is used to indicate the second network device to send data to the first network device at the first rate value;
obtaining, by the first network device, an actual rate value, wherein the actual rate value is a rate value at which the first network device receives data sent by the second network device; and
sending, by the first network device, a second rate value to the second network device when the actual rate value is less than the first rate value, wherein the second rate value is used to indicate the second network device to send data to the first network device at the second rate value, and the second rate value is less than the first rate value.

2. The method according to claim 1, wherein the sending, by a first network device, a first rate value to a second network device comprises:
sending, by the first network device, the first rate value to the second network device based on a data transmission rate threshold of the second network device.

3. The method according to claim 1 or 2, wherein after the sending, by the first network device, a second rate value to the second network device, the method further comprises:
when the actual rate value is equal to the second rate value, sending, by the first network device, a third rate value to the second network device based on a data transmission rate threshold of the second network device, wherein the third rate value is used to indicate the second network device to send data to the first network device at the third rate value, and the third rate value is greater than the second rate value; or
the third rate value is greater than the first rate value.

4. The method according to claim 1 or 2, wherein after the sending, by the first network device, a second rate value to the second network device, the method further comprises:
sending, by the first network device, a fourth rate value to the second network device when the actual rate value is less than the second rate value, wherein the fourth rate value is used to indicate the second network device to send data to the first network device at the fourth rate value, and the fourth rate value is less than the second rate value.

5. A first network device, comprising:
a sending unit, configured to send a first rate value to a second network device, wherein the first rate value is used to indicate the second network device to send data to the first network device at the first rate value; and
an obtaining unit, configured to obtain an actual rate value, wherein the actual rate value is a rate value at which the first network device receives data sent by the second network device; wherein
the sending unit is configured to: when the actual rate value is less than the first rate value, send a second rate value to the second network device, wherein the second rate value is used to indicate the second network device to send data to the first network device at the second rate value, and the second rate value is less than the first rate value.

6. The first network device according to claim 5, wherein
the sending unit is specifically configured to send the first rate value to the second network device based on a data transmission rate threshold of the second network device.

7. The first network device according to claim 5 or 6, wherein
the sending unit is further configured to: when the actual rate value is equal to the second rate value, send a third rate value to the second network device based on a data transmission rate threshold of the second network device, wherein the third rate value is used to indicate the second network device to send data to the first network device at the third rate value, and the third rate value is greater than the second rate value.

8. The first network device according to claim 5 or 6, wherein
the sending unit is further configured to send a fourth rate value to the second network device when the actual rate value is less than the second rate value, wherein the fourth rate value is used to indicate the second network device to send data to the first network device at the fourth rate value, and the fourth rate value is less than the second rate value.

9. A first network device, comprising:
a processor, a memory, an input/output device, and a bus, wherein
the processor, the memory, and the input/output device are connected to the bus; and
the processor is configured to perform the method according to any one of claims 1 to 4.

10. A computer-readable storage medium, wherein the computer-readable storage medium stores a program, and when a computer executes the program, the method according to any one of claims 1 to 4 is performed.

11. A computer program product, wherein when the computer program product is executed on a computer, the computer performs the method according to any one of claims 1 to 4.
